# DEMANDE DE BREVET EUROPEEN

(11) **EP 2 265 045 A1**
(43) Date de publication de la demande: **22.12.2010**
(21) Numéro de dépôt: 10164780.8
(22) Date de dépôt: 02.06.2010
(51) Int. Cl.: H04W 4/02, H04L 29/08, G06F 17/30, G06K 19/07, G01C 17/30, G01S 5/14, G01S 5/00

(54) **Entité électronique et carte à microcircuit pour entité électronique**

(30) Priorité: 15.06.2009 FR 0953995
(71) Demandeur: Oberthur Technologies, 92300 Levallois-Perret (FR)
(72) Inventeur: Stranges, Lorenzo, 92200, NEUILLY SUR SEINE (FR)
(74) Mandataire: Bonnans, Arnaud

(57) **Abrégé**

L'entité électronique et la carte à microcircuit (1300) objets de la présente invention comprennent :
- des moyens (1300, 1310, 1320) d'obtention de l'orientation de l'entité électronique,
- des moyens (1300, 1330, 1350) d'envoi d'une requête contenant des informations sur ladite orientation,
- des moyens (1300, 1330, 1350) de réception d'informations relatives à au moins une entité positionnelle liée à la position géographique de l'entité électronique et à ladite orientation et
- des moyens (1300, 1330, 1350) de fourniture, à un utilisateur, d'informations relatives à au moins une entité positionnelle reçues par les moyens de réception.

## Description

L'invention concerne une entité électronique et une carte à microcircuit pour entité électronique, notamment entité électronique portable telle qu'un téléphone portable ou un assistant personnel numérique.

On a proposé, par exemple dans le document US 2003/0069693, un dispositif de pointage géographique qui inclut un récepteur GPS, un compas numérique et une base de données. Ce dispositif affiche la position et la direction de l'utilisateur sur une carte qui comporte des points d'intérêt. Il est prévu de permettre à un utilisateur de pointer sur un objet pour obtenir une identification et des caractéristiques de cet objet. Cette solution ne peut toutefois être mise en oeuvre que lorsque le dispositif comprend les éléments nécessaires à cet effet (tel qu'un compas et une base de données dans le document précité).

La présente invention vise à remédier à ces inconvénients.

A cet effet, selon un premier aspect, la présente invention vise une entité électronique **caractérisée en ce qu**'elle comprend :
- des moyens d'obtention de l'orientation de l'entité électronique,
- des moyens d'envoi d'une requête contenant des informations sur ladite orientation,
- des moyens de réception d'informations relatives à au moins une entité positionnelle liée à la position géographique de l'entité électronique et à ladite orientation et
- des moyens de fourniture, à un utilisateur, d'informations relatives à au moins une entité positionnelle reçues par les moyens de réception.

Grâce à ces dispositions, l'entité électronique objet de la présente invention peut recevoir des informations mises à jour sur au moins une entité positionnelle se trouvant à proximité de l'entité électronique et commander l'affichage de tout ou partie de ces informations afin que l'utilisateur de l'entité électronique puisse en prendre connaissance.

On note que le serveur qui répond à la requête par envoi des informations relatives à au moins une entité positionnelle reçoit, avec la requête, des informations de position de l'entité électronique. Ces informations peuvent être fournies par une carte à microcircuit intégrée à l'entité électronique (carte qui comporte alors, par exemple, un récepteur de signaux et des moyens de triangulation), par l'entité électronique (qui comporte alors, par exemple, un récepteur de signaux et des moyens de triangulation) ou par un réseau de télécommunication, par exemple mobile (qui transmet alors, par exemple, l'identification de la cellule dans laquelle se trouve l'entité électronique ou des puissances de signaux en provenance de l'entité électronique reçus par différentes antennes, une triangulation étant effectuée par ce réseau ou par le serveur considéré).

Selon des caractéristiques particulières, l'entité électronique objet de la présente invention, telle que succinctement exposée ci-dessus, comporte, en outre, des moyens d'obtention de la position géographique, les moyens d'envoi d'une requête étant adaptés à ce que ladite requête contienne des informations sur ladite position géographique.

Les moyens de d'obtention de la position géographique peuvent comprendre des moyens d'obtention d'une information de localisation de l'entité électronique. Il s'agit par exemple d'une information de localisation d'une cellule à travers laquelle l'entité électronique communique dans un réseau de téléphonie mobile ou de plusieurs cellules dont l'entité électronique reçoit les signaux et, par triangulation, détermine sa position, ce qui est particulièrement intéressant lorsque l'entité électronique est un téléphone portable.

Selon des caractéristiques particulières, les dits moyens d'obtention de la position géographique comportent des moyens de réception de signaux de positionnement et des moyens de détermination de localisation géographique en fonction desdits signaux de positionnement.

Par exemple, l'information de position géographique est obtenue au moyen d'un système de type GPS.

Selon des caractéristiques particulières, les dits moyens d'obtention de la position géographique comportent des moyens d'obtention d'une référence d'une cellule de réseau de téléphonie cellulaire dans laquelle l'entité électronique est située.

Selon des caractéristiques particulières, les dits moyens d'obtention de l'orientation de l'entité électronique comportent un magnétomètre.

On rappelle ici qu'un magnétomètre permet de déterminer la direction du nord magnétique qui sert de direction de référence par rapport à laquelle on détermine l'orientation de l'entité électronique.

On peut prévoir également des moyens aptes à commander l'affichage sur un écran de l'entité électronique d'un message demandant à l'utilisateur de disposer l'entité électronique dans une position déterminée adéquate pour la mesure de l'orientation de l'entité électronique.

Selon un mode de réalisation, l'entité électronique objet de la présente invention comporte une carte à microcircuit, des moyens d'émission d'une information indicative d'un modèle de l'entité électronique et des moyens de réception d'une donnée représentative de l'orientation relative de l'entité électronique et de la carte à microcircuit pour ledit modèle, les moyens d'obtention de l'orientation de l'entité électronique mettant en oeuvre ladite orientation respective.

Ainsi, la détermination de l'orientation relative de la carte à microcircuit et de l'entité électronique est automatique.

L'entité électronique est, par exemple, un téléphone mobile.

Selon un mode de réalisation, l'entité électronique comporte une carte à microcircuit et des moyens d'accès à un menu SimToolKit de ladite carte à microcircuit et des moyens de sélection, dans ledit menu, d'une application commandant les moyens d'obtention de l'orientation, les moyens d'envoi d'une requête, les moyens de réception d'informations relatives à au moins une entité positionnelle et les moyens de fourniture, à un utilisateur, d'informations relatives à au moins une entité positionnelle.

Selon des caractéristiques particulières, l'entité électronique comporte une carte à microcircuit, les moyens d'obtention de l'orientation de l'entité électronique étant adaptés à déterminer une orientation relative de la carte à microcircuit et de l'entité électronique lors de la première utilisation de la carte à microcircuit ou du premier lancement d'une application commandant les moyens d'obtention de l'orientation, les moyens d'envoi d'une requête, les moyens de réception d'informations relatives à au moins une entité positionnelle et les moyens de fourniture, à un utilisateur, d'informations relatives à au moins une entité positionnelle.

Dans un mode de réalisation, les moyens de fourniture, à un utilisateur, d'informations relatives à au moins une entité positionnelle reçues par les moyens de réception sont adaptés à afficher au moins un lien hypertexte et à permettre à l'utilisateur de sélectionner ce lien pour obtenir des informations complémentaires relatives à une entité positionnelle.

Selon un deuxième aspect, la présente invention vise une carte à microcircuit destinée à équiper une entité électronique, **caractérisée en ce qu**'elle comprend :
- des moyens d'obtention de l'orientation de l'entité électronique,
- des moyens d'envoi d'une requête contenant des informations sur ladite orientation,
- des moyens de réception d'informations relatives à au moins une entité positionnelle liée à la position géographique de l'entité électronique et à ladite orientation et
- des moyens de fourniture, à un utilisateur, d'informations relatives à au moins une entité positionnelle reçues par les moyens de réception.

Ainsi, l'entité électronique peut indiquer au moins une entité positionnelle dès lors qu'on l'équipe de la carte à microcircuit (par exemple par insertion de celle-ci dans un logement prévu à cet effet), sans que l'entité électronique n'intègre elle-même les moyens nécessaires à la détermination de l'orientation.

Dans des modes de réalisation, la carte à microcircuit comporte des moyens de présentation à l'utilisateur de l'entité électronique d'une orientation de référence, les moyens d'obtention de l'orientation de l'entité électronique étant adaptés à déterminer l'orientation de l'entité électronique relativement à ladite orientation de référence.

Dans des modes de réalisation, la carte à microcircuit comprend une face présentant une indication visuelle d'une direction de référence associée aux moyens d'obtention de l'orientation.

Grâce à chacune de ces dispositions, l'utilisateur peut repérer quelle partie de la carte à microcircuit, et donc de l'entité électronique, il doit orienter vers l'entité positionnelle qui l'intéresse pour obtenir des informations concernant cette entité positionnelle.

Selon un troisième aspect, la présente invention vise un système informatique qui comprend :
- des moyens de réception d'une requête contenant des informations sur l'orientation d'une entité électronique,
- des moyens de réception d'informations sur la position géographique de ladite entité électronique,
- des moyens de détermination d'informations relatives à au moins une entité positionnelle liée à la position géographique de l'entité électronique et à ladite orientation et
- des moyens de réponse à ladite requête, par transmission des dites informations relatives à au moins une entité positionnelle.

Selon des caractéristiques particulières, les moyens de détermination sont adaptés à déterminer des informations relatives à au moins un panneau publicitaire et à la publicité affichée sur ledit panneau publicitaire.

Selon un quatrième aspect, la présente invention vise un procédé de fourniture d'informations relatives à des entités positionnelles, **caractérisé en ce qu**'il comprend :
- une étape d'obtention, par une entité électronique, de l'orientation de l'entité électronique,
- une étape d'envoi, par l'entité électronique, d'une requête contenant des informations sur ladite orientation,
- une étape de réception, par l'entité électronique, d'informations relatives à au moins une entité positionnelle liée à la position géographique de l'entité électronique et à ladite orientation et
- une étape de fourniture, par l'entité électronique, à un utilisateur, d'informations relatives à au moins une entité positionnelle reçues par les moyens de réception.

Les avantages, buts et caractéristiques particulières de la carte à microcircuit, du système informatique et du procédé objets respectivement du deuxième au quatrième aspect de la présente invention étant similaires à ceux de l'entité électronique objet du premier aspect de la présente invention, ils ne sont pas rappelés ici.

Les avantages, buts et caractéristiques particulières de la carte à microcircuit, du système informatique et du procédé objets respectivement du deuxième au quatrième aspect de la présente invention étant similaires à ceux de l'entité électronique objet du premier aspect de la présente invention, ils ne sont pas rappelés ici.

Il n'est actuellement pas possible, pour un utilisateur de téléphone quelconque, de pointer sur un objet pour obtenir une identification et des caractéristiques de cet objet. Selon certains de ces aspects, la présente invention vise aussi à remédier à ces inconvénients.

A cet effet, selon un cinquième aspect, la présente invention vise une carte à microcircuit destinée à équiper une entité électronique, **caractérisée en ce qu**'elle comprend :
- des moyens d'obtention de l'orientation de la carte à microcircuit,
- des moyens aptes à obtenir des informations sur au moins une entité positionnelle, en fonction de ladite orientation et
- des moyens de fourniture, à un utilisateur, d'informations relatives à au moins une entité positionnelle obtenues.

Ainsi, l'entité électronique peut indiquer au moins une entité positionnelle dès lors qu'on l'équipe de la carte à microcircuit (par exemple par insertion de celle-ci dans un logement prévu à cet effet) objet du cinquième aspect de la présente invention, sans que l'entité électronique n'intègre elle-même les moyens nécessaires à la détermination de l'orientation.

Selon des caractéristiques particulières, les moyens aptes à obtenir des informations sur des entités positionnelles comportent :
- des moyens d'envoi d'une requête contenant des informations sur ladite orientation et
- des moyens de réception d'informations relatives à au moins une entité positionnelle liée à la position géographique de la carte à microcircuit et à ladite orientation.

Les avantages de ces dispositions comportant ceux de l'entité électronique objet du premier aspect de la présente invention, ils ne sont pas rappelés ici.

Selon des caractéristiques particulières, la carte à microcircuit objet de la présente invention, telle que succinctement exposée ci-dessus, comporte, en outre, des moyens d'obtention de la position géographique de ladite carte à microcircuit, les moyens d'envoi d'une requête étant adaptés à ce que ladite requête contienne des informations sur la position géographique de la carte à microcircuit.

Les moyens d'obtention de position peuvent comprendre des moyens d'obtention d'une information de localisation de la carte à microcircuit (donc de l'entité électronique). Il s'agit par exemple d'une information de localisation d'une cellule à travers laquelle l'entité électronique communique dans un réseau de téléphonie mobile, ce qui est particulièrement intéressant lorsque l'entité électronique est un téléphone portable.

Selon des caractéristiques particulières, les dits moyens d'obtention de la position géographique comportent des moyens de réception de signaux de positionnement et des moyens de détermination de localisation géographique en fonction desdits signaux de positionnement.

Par exemple, l'information de position géographique est obtenue au moyen d'un système de type GPS.

Selon des caractéristiques particulières, les dits moyens d'obtention de l'orientation de la carte à microcircuit comportent un magnétomètre.

On rappelle ici qu'un magnétomètre permet de déterminer la direction du nord magnétique qui sert de direction de référence par rapport à laquelle on détermine l'orientation de la carte à microcircuit.

On peut prévoir également des moyens aptes à commander l'affichage sur un écran de l'entité électronique d'un message destiné à l'utilisateur pour qu'il dispose l'entité électronique dans une position déterminée adéquate pour la mesure de l'orientation de la carte à microcircuit.

Selon un mode de réalisation envisageable, la carte à microcircuit comprend, par exemple, une face présentant une indication visuelle (telle qu'une flèche imprimée sur cette face) d'une direction de référence associée aux moyens d'obtention d'orientation. Ceci permet d'aligner la carte à microcircuit (typiquement l'indication visuelle qu'elle présente) avec l'entité positionnelle, sans avoir à tenir compte de l'orientation relative de la carte à microcircuit et de l'entité électronique.

Selon une autre possibilité de réalisation, la carte à microcircuit peut également inclure des moyens d'émission d'une information indicative d'un modèle de l'entité électronique et des moyens de réception d'une donnée représentative de l'orientation relative de l'entité électronique et de la carte à microcircuit pour ledit modèle. La carte à microcircuit peut alors commander la production (ou restitution) du signal indicatif en tenant compte de cette orientation relative.

La carte à microcircuit est par exemple une carte d'identification (« SIM » ou « USIM ») à un réseau de téléphonie mobile.

En pratique, les moyens de fourniture d'informations peuvent notamment être aptes à émettre une commande (telle qu'une commande de type "SIM TOOLKIT") de génération d'un signal à destination d'un microprocesseur de l'entité électronique.

Selon un sixième aspect, la présente invention vise une entité électronique équipée d'une carte à microcircuit telle que succinctement exposée ci-dessus.

Selon un septième aspect, la présente invention vise un procédé de fourniture d'informations relatives à des entités positionnelles, **caractérisé en ce qu**'il comprend :
- une étape d'obtention, par une carte à microcircuit, de l'orientation de ladite carte à microcircuit,
- une étape d'obtention d'informations sur au moins une entité positionnelle, en fonction de ladite orientation et
- une étape de fourniture, par la carte à microcircuit, à un utilisateur, d'informations relatives à au moins une entité positionnelle obtenues au cours de l'étape d'obtention.

D'autres avantages, buts et caractéristiques particulières de la carte à microcircuit, de l'entité électronique et du procédé objets respectivement du cinquième au septième aspect de la présente invention étant similaires à ceux de l'entité électronique et de la carte à microcircuit objets des deux premiers aspects de la présente invention, ils ne sont pas rappelés ici.

D'autres avantages, buts et caractéristiques de la présente invention apparaîtront à la lumière de la description qui suit, faite en référence aux dessins annexés dans lesquels :
- la figure 1 représente un système dans lequel intervient un téléphone portable équipé d'une carte à microcircuit conforme aux enseignements de l'invention ;
- la figure 2 représente de manière schématique cette carte à microcircuit ;
- la figure 3 représente une possibilité envisagée pour déterminer l'orientation relative de la carte à microcircuit et du téléphone portable et
- la figure 4 représente, sous forme d'un logigramme, des étapes d'un mode de réalisation particulier du procédé objet de la présente invention.

Dans la description qui va suivre, on a détaillé des modes de réalisation dans lesquels les principaux moyens et les principales étapes implémentant le concept inventif de la présente invention sont incorporés dans une carte à microcircuit d'une entité électronique. Cependant, la présente invention ne se limite pas à cette architecture. En particulier, dans des modes de réalisation (non représentés) aisément réalisables par l'homme du métier sur la base de la description qui va suivre, une entité électronique comporte au moins une partie de ces moyens principaux et met en oeuvre au moins une partie de ces étapes principale indépendamment de toute carte à microcircuit. Dans des modes de réalisation (non représentés), cette entité électronique ne comporte pas de carte à microcircuit ou comporte une carte à microcircuit de type connu dans l'état de l'art.

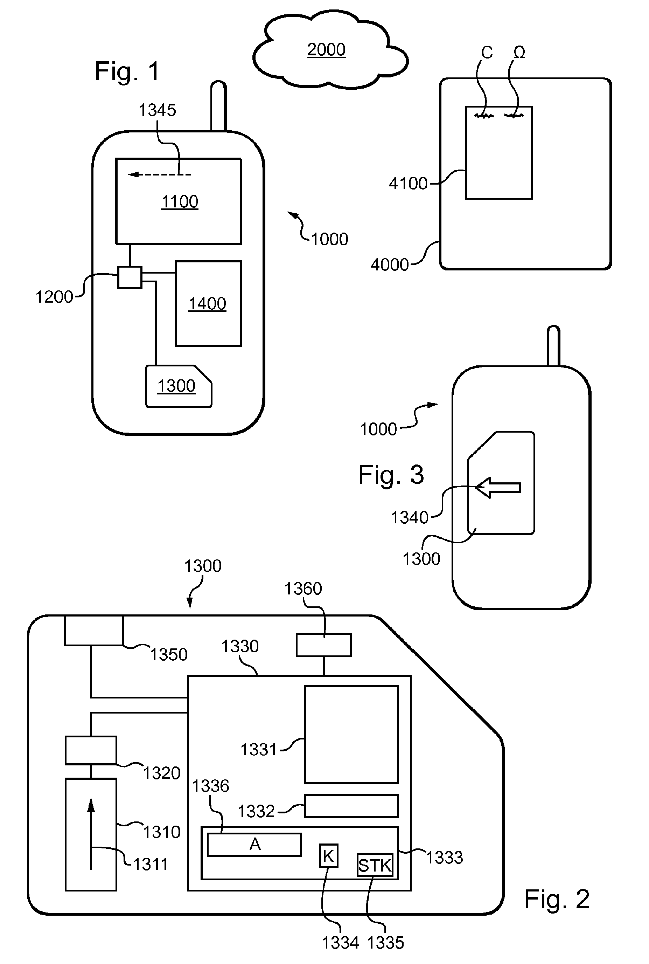

Le téléphone portable de la figure 1 comprend un microprocesseur 1200 apte notamment à afficher des messages à destination de l'utilisateur sur un écran 1100 et à recevoir des instructions de l'utilisateur à travers un clavier 1400.

Le téléphone portable 1000 reçoit, par exemple de manière amovible dans un logement prévu à cet effet, une carte à microcircuit 1300 connectée au microprocesseur 1200 à travers des contacts de la carte à microcircuit 1300 pour interagir avec celui-ci.

La carte à microcircuit 1300 est une carte d'identification à un réseau de téléphonie mobile 2000 (par exemple une carte à microcircuit SIM pour "Subscriber Identity Module" ou USIM pour "Universal Subscriber Identity Module") qui permet d'identifier l'utilisateur du téléphone portable 1000 (en général abonné au réseau de téléphonie mobile 2000) et ainsi d'être autorisé par le réseau de téléphonie mobile 2000 à échanger (grâce notamment à des moyens de communication équipant le téléphone portable 1000 non représentés) des données à travers le réseau de téléphonie mobile 2000 (ces données pouvant représenter des signaux vocaux lorsque le téléphone mobile 1000 est utilisé pour dialoguer avec un utilisateur distant, ou constituer d'autres types de données, tel qu'un message, un fichier image ou des données utiles au fonctionnement du téléphone portable 1000 comme décrit ci-après).

Le réseau de téléphonie mobile 2000 est un réseau de type cellulaire dans lequel la zone couverte par le réseau est divisée en cellules : une antenne-relais du réseau de téléphonie mobile 2000 est associée à chaque cellule de telle sorte que le téléphone portable 1000 a accès au réseau de téléphonie mobile 2000 à travers l'antenne relais associée à la cellule dans laquelle le téléphone portable 1000 se situe.

Le téléphone portable 1000 peut notamment échanger des données avec un serveur distant 4000, mettant en oeuvre le protocole http (acronyme de « hypertext transfer protocol » pour protocole de transfert hypertexte) ou un protocole d'échange de messages courts « SMS » (acronyme de « short message system »). Le serveur distant héberge une base de données 4100 accessible par internet ou par SMS. Préférentiellement, la base de données 4100 conserve un plan représentant des points d'intérêt appelés « entités positionnelles » et des informations associées. Les entités positionnelles sont, par exemple, des bâtiments, des monuments, des arbres, rivières, lacs, montagnes, îles, et, plus généralement, des objets immobiles. Les informations relatives aux entités positionnelles peuvent comporter, par exemple, une adresse postale, des coordonnées géographiques, un type (hôpital, panneau publicitaire, ...) une adresse internet « URL » (acronyme de « Uniform Resource Locator » pour localisateur de ressource uniforme) comportant des informations complémentaire sur l'entité positionnelle, ou des liens vers d'autres bases de données. Les informations associées aux entités positionnelles, dans la base de données 4100, peuvent aussi comporter des photos, des noms de sociétés ou d'organismes, des horaires d'ouverture, des ressources (places de parking, hôtel, restaurant, ...), des prix, des offres promotionnelles, commerciales ou discount.

La base de données 4100 contient des panneaux publicitaires (localisation et, éventuellement, dimension) et peut fournir des informations sur la publicité affichée. Pour la mise à jour de cette publicité, lorsque l'opérateur qui change l'affichage intervient sur un panneau, il se connecte, avec un dispositif portable, au serveur 4000, de façon sécurisée, et met à jour l'information sur l'affichage et les informations associées (contenu, texte, ...).

Le serveur 4000 peut stocker des données telles que celles du fichier 4100 pour une pluralité d'entités positionnelles mais on se limitera parfois, dans la présente description, au cas d'une entité positionnelle, par souci de simplification.

On note que le serveur 4000 et la base de données 4100 peuvent êtres constitués des systèmes mettant en oeuvre des bases de données cartographiques, par exemple « Google Map » (marque déposée) ou « Mappy » (marque déposée).

La figure 2 est une représentation schématique des éléments de la carte à microcircuit 1300.

La carte à microcircuit 1300 comprend un processeur 1330 qui incorpore notamment une mémoire morte 1331 (où sont par exemple mémorisées des instructions dont l'exécution par le processeur 1330 permet notamment le fonctionnement de base de la carte à microcircuit), une mémoire vive 1332 (où sont mémorisées temporairement des données utilisées dans le fonctionnement de la carte à microcircuit 1300) et une mémoire non volatile réinscriptible 1333.

La mémoire non volatile réinscriptible 1333 mémorise notamment :
- une clé cryptographique K 1334 permettant l'identification de l'utilisateur auprès du réseau de téléphonie mobile 2000 comme déjà mentionné,
- un menu STK (pour "SIM TOOLKIT" ou kit d'outils de carte SIM) 1335 qui est une application dont l'exécution permet au processeur 1330 de commander au microprocesseur 1200 du téléphone portable 1000 l'affichage sur l'écran 1100 d'un menu présentant les fonctionnalités permises par la carte à microcircuit 1300, et
- une application A 1336 d'information sur des entités positionnelles, application dont l'exécution permet la mise en oeuvre du procédé décrit dans la suite.

Comme déjà mentionné, la carte à microcircuit 1300 présente des contacts 1350 au travers desquels le processeur 1330 de la carte à microcircuit 1300 peut dialoguer et interagir avec le microprocesseur 1200 du téléphone portable 1000.

La carte à microcircuit 1300 comprend également un magnétomètre 1310, réalisé par exemple selon une technologie MEMS (pour "Micro Electro Mechanical System" ou système micro électro-mécanique) ou NEMS (pour "Nano Electro Mechanical System" ou système nano électro-mécanique), ayant typiquement une épaisseur comprise entre 400 µm et 500 µm, et un contrôleur 1320 (par exemple un circuit intégré spécialisé ou ASIC) qui reçoit les signaux émis par le magnétomètre 1310 et émet en conséquence des données à destination du processeur 1330, par exemple des données représentatives de l'orientation du magnétomètre 1310 (en général une direction privilégiée de celui-ci tel que représenté par une flèche 1311 en figure 2) par rapport au nord magnétique.

La carte à microcircuit 1300 comprend un récepteur 1360 de signaux de localisation géographique apte à déterminer la position géographique de la carte à microcircuit 1300, et donc du téléphone portable 1000. Par exemple, ce récepteur 1360 est un récepteur de signaux émis par des satellites, par exemple des satellites du « Global Positioning System » GPS (marques déposées). En variante, le récepteur 1360 est un récepteur de signaux d'émetteurs du réseau de téléphonie mobile capable, par triangulation, de déterminer la position du téléphone 1000. Le récepteur 1360 est connecté au processeur 1330.

En variante, le processeur 1330 (toujours du fait de l'exécution de l'application A 1336) obtient, à titre de localisation géographique, la référence de la cellule C dans laquelle le téléphone portable 1000 est situé, par exemple en lisant le fichier « EF LOCI » dans la mémoire non volatile réinscriptible 1333 de la carte à microcircuit 1300 ou en émettant une commande STK, par exemple « PROVIDE LOCAL INFO », à destination du microprocesseur 1200 du téléphone portable 1000 qui doit alors retourner au processeur 1330 l'information relative à la référence de la cellule C.

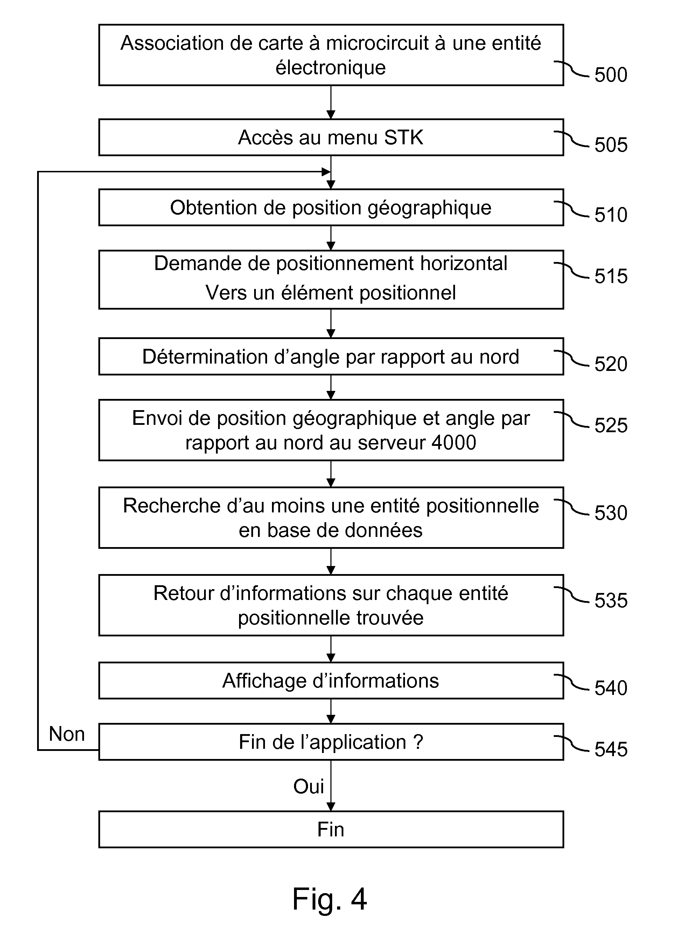

On décrit ci-après, en regard de la figure 4, des étapes d'un mode de réalisation particulier du procédé objet de la présente invention.

Tout d'abord, au cours d'une étape 500, on associe une carte à microcircuit 1300 objet de la présente invention à une entité électronique 1000. Typiquement, on insert une carte SIM dans le logement prévu à cet effet dans un téléphone portable.

Lorsque l'utilisateur du téléphone portable 1000 souhaite obtenir de l'information sur une entité positionnelle, au cours d'une étape 505, il accède au menu STK 1335 de la carte à microcircuit 1300 (ce que permet par convention tout téléphone portable équipé d'une telle carte) et sélectionne l'application A 1336 dans ce menu STK 1335, ce qui provoque l'exécution de l'application A 1336 et ainsi du procédé décrit à présent.

Au cours d'une étape 510, l'application A 1336 obtient du récepteur 1360 la position géographique PG de la carte à microcircuit 1300 et donc du téléphone portable 1000.

Au cours d'une étape 515, le processeur 1330 commande alors au microprocesseur 1200 l'affichage sur l'écran 1100 d'un message à destination de l'utilisateur qui demande à celui-ci de disposer le téléphone portable 1000 dans une position déterminée (par exemple "à plat") qui permette au magnétomètre 1310 de mesurer dans de bonnes conditions son orientation par rapport au nord magnétique, typiquement de telle sorte que le plan d'extension de la carte à microcircuit 1300 se situe (au moins approximativement) à l'horizontal.

Dans cette disposition, l'utilisateur oriente alors le téléphone portable vis-à-vis de l'entité positionnelle qui l'intéresse et valide sa demande d'information.

Au cours d'une étape 520, le processeur 1330 détermine alors en interagissant avec le contrôleur 1320 l'angle formé à cet instant entre la carte à microcircuit 1300 (et par déduction comme expliqué ci-après du téléphone portable 1000) et le nord magnétique, soit en lisant des données périodiquement reçues du contrôleur 1320, soit en émettant à destination du contrôleur 1320 une requête pour recevoir de telles données.

On remarque que la possibilité de déterminer l'orientation du téléphone portable à l'aide du magnétomètre 1310 situé dans la carte à microcircuit 1300 suppose définie au préalable l'orientation relative du téléphone portable 1000 et de la carte à microcircuit 1300.

Pour ce faire, on peut par exemple conserver dans la mémoire non volatile réinscriptible 1333 une donnée représentative de l'orientation relative du téléphone portable 1000 et de la carte à microcircuit 1300.

Cette donnée représentative de l'orientation relative est par exemple déterminée lors de la première utilisation de la carte à microcircuit 1330 ou du premier lancement de l'application A 1366.

On peut prévoir à cette occasion que la carte à microcircuit 1300 (par exemple sous le contrôle de l'application A 1336 lors de sa première utilisation) demande à l'utilisateur (par un affichage adéquat sur l'écran 1100, par exemple au moyen d'une commande STK) d'orienter son téléphone portable 1000 (par exemple une partie précise de celui-ci) vers le nord magnétique (déterminé par exemple à l'aide d'une boussole) et d'enfoncer une touche du clavier 1400.

Ainsi, lorsque l'utilisateur enfonce la touche, l'orientation mesurée par le magnétomètre 1310 est transmise au processeur 1330 et mémorisée comme donnée d'orientation relative (ou donnée de référence) dans la mémoire non volatile réinscriptible 1333 en tant qu'angle émis par le contrôleur 1320 et désignant le nord magnétique.

On peut alors déduire simplement l'orientation du téléphone portable 1000 de l'orientation du magnétomètre 1310 par simple soustraction utilisant cette donnée de référence.

En variante, la donnée représentative de l'orientation relative peut être déterminée comme suit : la carte à microcircuit 1300 obtient du téléphone portable 1000 une information indiquant le modèle du téléphone portable 1000, envoie cette information à un serveur dédié (par exemple le serveur 4000 susmentionné et éventuellement à travers le réseau de téléphonie mobile 2000) où est mémorisée, pour chaque modèle de téléphone, la donnée représentative de l'orientation relative associée à ce modèle. Le serveur dédié envoie alors en retour la donnée représentative de l'orientation relative associée au modèle du téléphone portable 1000 à la carte à microcircuit 1300 qui mémorise cette donnée.

Selon une autre variante envisageable, dans laquelle on n'utilise pas, cette fois, une telle donnée représentative de l'orientation relative, on peut prévoir qu'une orientation de référence soit indiquée à l'utilisateur, par exemple par la présence d'une flèche imprimée 1340 sur une face de la carte à microcircuit comme représenté en figure 3. L'indication d'orientation fournie au serveur sous la commande de l'application A 1336 est alors une indication d'orientation relativement à cette orientation de référence. Pour aider l'utilisateur à repérer cette direction, lors de l'installation de la carte à microcircuit, l'application A 1336 peut demander de choisir l'une de quatre flèches affichées sur l'écran 1100 qui correspond à la flèche 1340 imprimée sur la carte à microcircuit 1300. Lors de l'utilisation ultérieure de l'application A 1336, celle-ci commande l'affichage, sur l'écran 1100, d'une flèche orientée comme la flèche sélectionnée initialement afin que l'utilisateur visualise la direction dans laquelle il doit viser l'entité positionnelle qui l'intéresse pour obtenir des informations qui concernent cette entité positionnelle. Une telle flèche affichée 1345 est représentée, en pointillé en figure 1.

Au cours d'une étape 525, l'application A 1336 envoie au serveur 4000 la position géographique PG et l'angle α, par message court SMS, internet, ou autre, par l'intermédiaire des contacts 1350, du microprocesseur 1200 et du réseau de téléphonie mobile 2000. Cet envoi est, éventuellement, sécurisé grâce à des moyens cryptographiques de la carte à microcircuit 1300.

Au cours d'une étape 530, le serveur 4000 recherche, dans la base de données 4100, en effectuant, éventuellement, des calculs trigonométriques, au moins une entité positionnelle correspondant à l'angle α et à la position géographique PG, c'est-à-dire que, depuis cette position géographique, l'entité positionnelle se trouve, par rapport au nord, dans la direction identifiée par l'angle α. A la suite de la description de la figure 4, on donne des exemples de manières d'effectuer la recherche d'entités positionnelles effectuée par le serveur 4000.

Au cours d'une étape 535, le serveur 4000 communique à l'application A 1336, par l'intermédiaire du réseau de téléphonie mobile 2000, du microprocesseur 1200 et des contacts 1350, les informations associées à chaque entité positionnelle trouvée dans la base de données 4100.

La liste des entités positionnelles peut être envoyée par le serveur 4000 sous la forme d'une page html comportant une liste de label (nom de l'entité positionnelle) et une URL permettant d'avoir plus d'info sur l'entité positionnelle.

Par exemple :
- Tour Eiffel: www.tour-eiffel.fr
- Musée du quai Branly: www.quaibranly.fr
- Resto. Tour Eiffel: www.restaurants-toureiffel.com

Au cours d'une étape 540, l'application A 1336 commande l'affichage, sur l'écran 1100, en envoyant un message au microprocesseur 1200, de tout ou partie des informations associées à au moins une entité positionnelle considérée.

Si un lien (par exemple une adresse électronique URL ou avec une base de données) fait partie des informations affichées, l'utilisateur peut sélectionner ce lien pour obtenir des informations complémentaires relatives à l'entité positionnelle concernée.

De manière optionnelle, au début de l'étape 540, lorsque plusieurs entités positionnelles ont été trouvées par le serveur 4000, l'application A 1336 (c'est-à-dire le processeur 1330 sous l'effet de l'exécution de l'application A 1336) peut demander à l'utilisateur (au moyen d'un affichage sur l'écran 1100 et en attendant un retour de l'utilisateur sur le clavier 1400) quelle entité positionnelle l'intéresse. Comme déjà indiqué, on s'intéresse dans la suite à une seule entité positionnelle que l'utilisateur a par exemple choisi dans cette étape.

Au cours d'une étape 545, l'utilisateur peut mettre fin à l'exécution de l'application A 1336 en appuyant sur une touche du clavier 1400 du téléphone portable 1000 (ce qu'un affichage adéquat sur l'écran 1100 peut également suggérer à l'utilisateur).

Si l'utilisateur ne met pas fin à l'exécution de l'application A 1336, on retourne à l'étape 510.

En ce qui concerne la recherche effectuée par le serveur 4000 au cours de l'étape 530, on donne, ci-après, des exemples d'implémentation.

Dans un premier exemple, la base de données 4100 comporte la dimension au moins de la façade sur rue de chaque bâtiment d'intérêt. En variante, la base de données 4100 ne comporte que le centre de chaque bâtiment d'intérêt et la recherche se fait avec une tolérance angulaire. Dans les deux cas, le serveur 4000 retrouve et renvoie les informations sur les entités positionnelles sans cherche au delà d'un nombre prédéterminé de façades rencontrées sur la ligne de visée, par exemple une. Plus généralement, la base de données 4100 ne renvoie l'information que sur l'entité positionnelle la plus proche de la position de l'entité électronique, dans la direction pointée.

Dans un deuxième exemple, le serveur 4000 renvoie une liste d'entités positionnelles par exemple comprises dans un polygone (par exemple un pentagone) déterminé par l'angle α, la position géographique PG, une largeur maximale et une longueur maximale, ces deux derniers paramètres pouvant être édités par l'utilisateur et l'application A 1366.

Dans un troisième exemple, au niveau de l'application A 1366, on passe d'une entité positionnelle à une autre dans une liste d'entités positionnelles correspondant à la position géographique PG et à l'angle α.

Dans un quatrième exemple, le serveur 4000 renvoie une liste d'entités positionnelles par exemple comprises dans un polygone (par exemple un pentagone) déterminé par l'angle α, la position géographique PG, une largeur maximale prédéterminée et une distance maximale depuis le téléphone portable, cette distance maximale étant un paramètre dont la valeur est fixée par l'utilisateur en mettant en oeuvre l'application A 1366. Le serveur 4000 renvoie alors une liste d'entités positionnelles répondant à ces critères. Une interface utilisateur de l'application A 1366, par exemple un bouton du clavier, permet à l'utilisateur de passer d'une entité à la suivante selon l'ordre des entités positionnelles trouvées dans la direction considérée.

Les modes de réalisation qui précèdent ne sont que des exemples possibles de mise en oeuvre de l'invention, qui ne s'y limite pas.

Notamment, la localisation courante du téléphone portable 1000 peut être obtenue par d'autres moyens que la réception de signaux GPS par le microcircuit 1300. Les informations de position de la carte à microcircuit peuvent être fournies par l'entité électronique (qui comporte alors, par exemple, un récepteur de signaux et des moyens de triangulation) ou par le réseau 2000 (qui transmet alors, par exemple, l'identification de la cellule dans laquelle se trouve l'entité électronique ou des puissances de signaux en provenance de l'entité électronique reçus par différentes antennes, une triangulation étant effectuée par ce réseau ou par le serveur considéré).

## Revendications

1. Entité électronique (1000), **caractérisée en ce qu'**elle comprend :
- des moyens (1300, 1310, 1320) d'obtention de l'orientation de l'entité électronique,
- des moyens (1300, 1330, 1350) d'envoi d'une requête contenant des informations sur ladite orientation,
- des moyens (1300, 1330, 1350) de réception d'informations relatives à au moins une entité positionnelle liée à la position géographique de l'entité électronique et à ladite orientation et
- des moyens (1300, 1330, 1350, 1100) de fourniture, à un utilisateur, d'informations relatives à au moins une entité positionnelle reçues par les moyens de réception.

2. Entité électronique selon la revendication 1, comportant en outre des moyens (1300, 1360) d'obtention de la position géographique, les moyens d'envoi d'une requête étant adaptés à ce que ladite requête contienne des informations sur ladite position géographique.

3. Entité électronique selon la revendication 2, dans laquelle les dits moyens (1300, 1360) d'obtention de la position géographique comportent des moyens de réception de signaux de positionnement et des moyens de détermination de localisation géographique en fonction desdits signaux de positionnement.

4. Entité électronique selon l'une quelconque des revendications 2 ou 3, dans laquelle les dits moyens (1300, 1360) d'obtention de la position géographique comportent des moyens d'obtention d'une référence d'une cellule de réseau de téléphonie cellulaire dans laquelle l'entité électronique est située.

5. Entité électronique selon l'une quelconque des revendications 1 à 4, dans laquelle les dits moyens (1300, 1310, 1320) d'obtention de l'orientation de l'entité électronique comportent un magnétomètre (1310).

6. Entité électronique selon l'une quelconque des revendications 1 à 5, comportant une carte à microcircuit (1300), des moyens (1300, 1330, 1350) d'émission d'une information indicative d'un modèle de l'entité électronique et des moyens (1300, 1330, 1350) de réception d'une donnée représentative de l'orientation relative de l'entité électronique et de la carte à microcircuit pour ledit modèle, les moyens d'obtention de l'orientation de l'entité électronique mettant en oeuvre ladite orientation respective.

7. Entité électronique selon l'une quelconque des revendications 1 à 6, comportant des moyens de téléphonie mobile.

8. Entité électronique selon l'une quelconque des revendications 1 à 7, comportant une carte à microcircuit (1300) et des moyens d'accès à un menu SimToolKit de ladite carte à microcircuit et des moyens de sélection, dans ledit menu, d'une application commandant les moyens d'obtention de l'orientation, les moyens d'envoi d'une requête, les moyens de réception d'informations relatives à au moins une entité positionnelle et les moyens de fourniture, à un utilisateur, d'informations relatives à au moins une entité positionnelle.

9. Entité électronique selon l'une quelconque des revendications 1 à 8, comportant une carte à microcircuit, les moyens d'obtention de l'orientation de l'entité électronique étant adaptés à déterminer une orientation relative de la carte à microcircuit et de l'entité électronique lors de la première utilisation de la carte à microcircuit ou du premier lancement d'une application commandant les moyens d'obtention de l'orientation, les moyens d'envoi d'une requête, les moyens de réception d'informations relatives à au moins une entité positionnelle et les moyens de fourniture, à un utilisateur, d'informations relatives à au moins une entité positionnelle.

10. Entité électronique selon l'une quelconque des revendications 1 à 9, dans laquelle les moyens de fourniture, à un utilisateur, d'informations relatives à au moins une entité positionnelle reçues par les moyens de réception sont adaptés à afficher au moins un lien hypertexte et à permettre à l'utilisateur de sélectionner ce lien pour obtenir des informations complémentaires relatives à une entité positionnelle.

11. Carte à microcircuit (1300) destinée à équiper une entité électronique (1000), **caractérisée en ce qu'**elle comprend :
- des moyens (1310, 1320) d'obtention de l'orientation de l'entité électronique,
- des moyens (1330, 1350) d'envoi d'une requête contenant des informations sur ladite orientation,
- des moyens (1330, 1350) de réception d'informations relatives à au moins une entité positionnelle liée à la position géographique de l'entité électronique et à ladite orientation et
- des moyens (1330, 1350) de fourniture, à un utilisateur, d'informations relatives à au moins une entité positionnelle reçues par les moyens de réception.

12. Carte à microcircuit (1300) selon la revendication 11, **caractérisée en ce qu'**elle est une carte d'identification à un réseau de téléphonie mobile (2000).

13. Carte à microcircuit selon l'une quelconque des revendications 11 ou 12, comportant des moyens de présentation à l'utilisateur de l'entité électronique d'une orientation de référence, les moyens d'obtention de l'orientation de l'entité électronique étant adaptés à déterminer l'orientation de l'entité électronique relativement à ladite orientation de référence.

14. Carte à microcircuit selon l'une quelconque des revendications 11 à 13, comprenant une face (1340) présentant une indication visuelle d'une direction de référence associée aux moyens d'obtention de l'orientation.

15. Système informatique (4000), **caractérisé en ce qu'**il comprend :
- des moyens de réception d'une requête contenant des informations sur l'orientation d'une entité électronique,
- des moyens de réception d'informations sur la position géographique de ladite entité électronique,
- des moyens (4100) de détermination d'informations relatives à au moins une entité positionnelle liée à la position géographique de l'entité électronique et à ladite orientation et
- des moyens de réponse à ladite requête, par transmission des dites informations relatives à au moins une entité positionnelle.

16. Système informatique (4000) selon la revendication 15, dans lequel les moyens de détermination (4100) sont adaptés à déterminer des informations relatives à au moins un panneau publicitaire et à la publicité affichée sur ledit panneau publicitaire.

17. Procédé de fourniture d'informations relatives à des entités positionnelles, **caractérisé en ce qu'**il comprend :
- une étape (520) d'obtention, par une entité électronique (1000), de l'orientation de l'entité électronique,
- une étape (525) d'envoi, par l'entité électronique, d'une requête contenant des informations sur ladite orientation,
- une étape (535) de réception, par l'entité électronique, d'informations relatives à au moins une entité positionnelle liée à la position géographique de l'entité électronique et à ladite orientation et
- une étape (540) de fourniture, par l'entité électronique, à un utilisateur, d'informations relatives à au moins une entité positionnelle reçues par les moyens de réception.
